# EUROPEAN PATENT APPLICATION

(11) **EP 1 818 848 A1**
(43) Date of publication of application: **15.08.2007**
(21) Application number: 07250424.4
(22) Date of filing: 01.02.2007
(51) Int. Cl.: G06F 21/02

(54) **Secure multimedia card and memory card system**

(30) Priority: 08.02.2006 KR 20060012190
(71) Applicant: Samsung Electronics Co., Ltd., Suwon-si, Gyeonggi-Do (KR)
(72) Inventor: Cheon, Won-Moon, Hwaseong-si Gyeonggi-do (KR); Park, Chan-ik, Guro-gu Seoul (KR); Kwon, Moon-sang, Seoul (KR)
(74) Representative: Mounteney, Simon James

(57) **Abstract**

Provided are a secure multimedia card (secure MMC) and a memory card system having the same. The memory card system may include a host, and a secure MMC having a user data area accessed by a normal command and a restricted area accessed by a secure command, wherein the user data area in communication with the host stores user data and the restricted area stores access restriction data. The restricted area may be accessed in the secure MMC even though the interface unit in the host does not support commands requesting the access to the restricted area in the secure MMC.

## Description

### BACKGROUND OF THE INVENTION

The present invention relates to a multimedia card, and more particularly, to a multimedia card having security features such as copyright protection, and a memory card system having the same.

A multimedia card, which is a kind of flash memory storage and communication device, is applied to a wide variety of devices such as a personal digital assistant (PDA), a digital camera, a smart phone, a digital recorder, an MP3 player, or the like.

In particular, since a multimedia card may be as small as a fingernail and is the smallest type of external flash memory, it is adapted for storing moving pictures and photographs in a mobile apparatus such as a cellular phone, a digital camera, or the like.

Recently developed technologies are capable of preventing piracy and protecting a copyright owner's rights and profits from the contents, e.g., music, photographs, moving pictures, which are stored in the multimedia card. In addition, there is an increasing demand for systems that manage billing and payment based on content.

### SUMMARY OF THE INVENTION

Some of the inventive principles of the present invention relate to a secure multimedia card (secure MMC) having a user data area accessed by a normal command and a restricted area accessed by a secure command. The restricted area may be accessed in the secure MMC even though the interface unit in the host does not support secure commands. This may be accomplished, for example, by sending a nonstandard argument with a normal command code. A secure MMC may interpret a normal command as a secure command when the normal command is accompanied by a nonstandard argument, e.g., an argument having a secure command parameter.

One aspect of the present invention relates to a secure MMC including a memory including a first area to be accessed by a first type of command, and a second area to be accessed by a second type of command, and a controller to access the memory in response to a command and an argument input to the MMC, wherein the controller converts the input command to the second type of command when the input command is the first type of command for accessing the first area and the argument has a predetermined value.

In some embodiments, the predetermined value comprises an address designating a range out of the first area. The argument may comprise a secure command parameter. The controller may regard data input to the MMC as a secure command parameter after converting the input command to the second type of command. The first area may be a user data area for storing user data, and the second area is a restricted area for storing access restriction data.

Another aspect of the present invention relates to a secure MMC including a memory including a user data area to be accessed by a normal command, and a restricted area to be accessed by a secure command, and a controller to access the memory in response to a command and an argument input to the MMC, wherein the controller converts the input command to the secure command when the input command is a normal command code, the argument has a predetermined value, and data input to the MMC has a predetermined pattern.

In some embodiments, the predetermined value of the argument comprises an address designating a zeroth sector in the user data area, and a master boot record (MBR) mark contained in the data is different from a defined pattern. The controller may regard data input to the MMC as a secure command parameter after converting the input command to the secure command. The second area may store data for a DRM function.

Another aspect of the present invention relates to a memory card system including a host, and a secure MMC including a first area to be accessed by a first type of command, and a second area to be accessed by a second type of command, wherein the host outputs the first type of command and an argument with a predetermined value to access the second area of the secure MMC, and the secure MMC recognizes the first type of command as the second type of command when the argument input with the first command has the predetermined value.

In some embodiments, the secure MMC may include a memory including the first and second areas, and a controller to access the memory in response to commands from the host. The controller may convert the first type of command to the second type of command when the argument input with the first type of command comprises an address designating a range out of the first area. The controller may convert data input from the host to a secure command parameter after converting the first type of command into the second type of command. The first area may comprise a user data area, and the second area may comprise a restricted area. In some embodiments, the first type of command comprises a normal command, the second type of command comprises a secure command, the host outputs the normal command, the argument with a predetermined value, and data with a predetermined value to access the restricted area of the secure MMC, and the secure MMC recognizes the normal command as the secure command to access the restricted area when the argument and the data input with the normal command have the predetermined values, respectively. The controller may convert the normal command to the secure command when the argument input with the normal command is an address designating a predetermined area in the user data area, and the data has a predetermined pattern. The controller may convert the normal command to the secure command when the argument input with the normal command designates a zeroth sector in the user data area, and an MBR mark contained in a data signal is different from a defined pattern.

Another aspect of the present invention relates to a method of operating a memory card system including a secure MMC having a user data area and a restricted data area, the method including generating a first command for accessing the user data area when access to the restricted data area is requested, wherein the first command includes access information of the restricted data area, determining whether the first command includes the access information of the restricted data area, converting the first command to a second command for accessing the restricted data area when the first command includes the access information of the restricted data area, and accessing the restricted data area in response to the converted second command.

In some embodiments, the method may further include generating the first command when access to the user data area is requested, and accessing the user data area in response to the first command when the first command does not include the access information of the restricted data area. The access information of the restricted data area may comprise an address designating a range out of the user data area. The access information of the restricted data area may comprise an address designating an MBR in the user data area, and data transmitted with the first command may have a different value than an MBR mark.

Another aspect of the present invention relates to a host including a controller to execute an application program, and an interface unit coupled to the controller to interface the host system to a secure MMC that operates in response to normal commands and secure commands, wherein the host system includes logic to convert a secure command to a normal command.

In some embodiments, the logic may convert a secure command to a normal command by sending a nonstandard argument with a normal command code. The nonstandard argument may comprise an address designating a range out of a user data area in the secure MMC. The nonstandard argument may comprise an address designating a sector having a master boot recorder (MBR) in a memory in the secure MMC, and data having a value different from a defined pattern for the MBR. The nonstandard argument may comprise a secure command parameter. The logic may comprise a secure command processor coupled between the controller and the interface unit.

Another aspect of the present invention relates to a secure MMC including a memory including a user data area to be accessed by normal commands, and a restricted area to be accessed by secure commands, and a controller to interpret a normal command as a secure command when the normal command is accompanied by an argument having a secure command parameter.

In some embodiments, the controller may determine that the argument has a secure command parameter when the argument includes an address designating a range out of the user data area. The controller may determine that the argument has a secure command parameter when the argument includes an address designating a sector having an MBR in a memory in the secure MMC, and data having a value different from a defined pattern for the MBR.

### BRIEF DESCRIPTION OF THE FIGURES

The accompanying figures are included to provide a further understanding of the present invention, and are incorporated in and constitute a part of this specification. The drawings illustrate exemplary embodiments of the present invention and, together with the description, serve to explain principles of the present invention. In the figures:
FIG. 1 is a block diagram illustrating a secure multimedia card (MMC) according to a preferred embodiment of the present invention;
FIG. 2 is a conceptual view of an interface between a host and a secure MMC in a memory card system having a secure MMC according to one embodiment of the present invention;
FIG. 3 is a block diagram illustrating a memory card system having a secure MMC according to a preferred embodiment of the present invention;
FIG. 4 is a flowchart illustrating how the memory card system of FIG. 3 may operate;
FIG. 5 is a schematic view illustrating a format of a secure command generated at a controller in the host according to an embodiment of the present invention;
FIG. 6 is a schematic view illustrating one example embodiment in which a secure command is converted into a normal command by a secure command processor;
FIG. 7 is a schematic view illustrating another example embodiment in which a secure command is converted into a normal command by a secure command processor;
FIG. 8 is a schematic view illustrating an example of signals exchanged between a host and a secure MMC when a secure read command is generated at a controller in a host; and
FIG. 9 is a schematic view illustrating an example of signals exchanged between a host and a secure MMC when a secure write command is generated at a controller in a host.

### DETAILED DESCRIPTION

Exemplary embodiments of the present invention will be described in conjunction with the accompanying drawings. A multimedia card according to an embodiment of the present invention may include security features such as copyright protection. Such a multimedia card will be referred to as a secure multimedia card (MMC).

A secure MMC according to an embodiment of the present invention is a multimedia card based on a flash memory, and has a digital rights management (DRM) function. The DRM is a technology that collectively supports creation, distribution and management of content, i.e., technologies to safely protect a copyright owner's rights and profits, prevent piracy, and enable billing and payment. The DRM includes digital copyright management technology allowing only an authorized user to use the contents and pay a relevant fee, software and security technology for copyright approval and execution, payment and billing technology, etc.

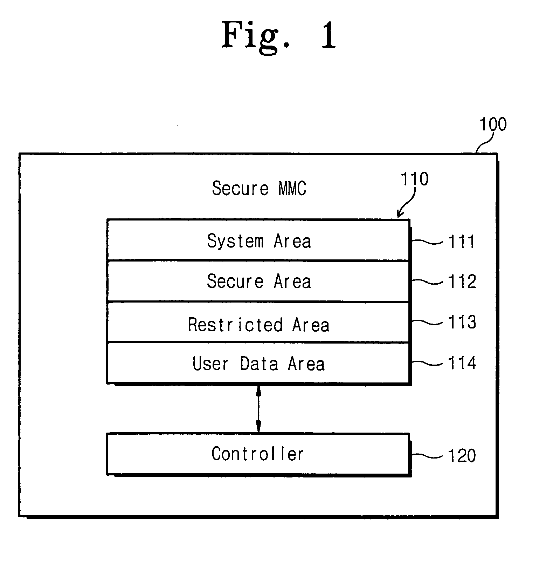

FIG. 1 is a block diagram illustrating a secure MMC according to an embodiment of the present invention. A memory 110, which is a storage area in the secure MMC 100, is configured as a flash memory. The memory 110 includes a system area 111, a secure area 112, a restricted area 113, and a user data area 114.

The system area 111 can be programmed only one time, and stores a unique system identifier. The secure area 112 can be programmed only one time, and can be read by legal functions. The restricted area 113 can be read/written by legal functions, and stores data for DRM functions. The user data area 114 stores general user files such as music, photographs, moving pictures, or the like. A controller 120 controls access to the storage region, i.e., the memory 110, in response to control signals or commands input to the MMC from an external host. In addition, the controller 120 accesses the user data area 114 when a normal command is input, and accesses the restricted area 113 when a secure command is input.

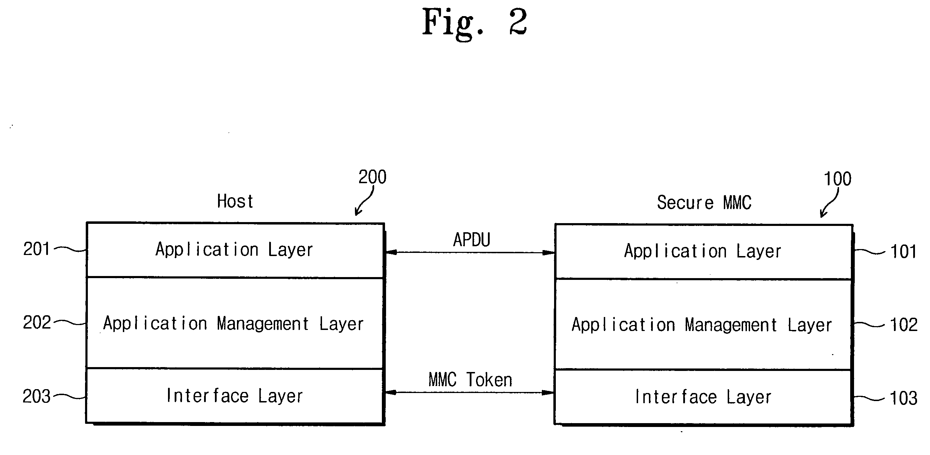

FIG. 2 is a conceptual view of an interface between a host and a secure MMC in a memory card system having the secure MMC according to one embodiment of the present invention.

Referring to FIG. 2, an application layer 210 of a host 200 and an application layer 101 of the secure MMC 100 exchange commands or control signals and data with each other according to an application data protocol unit (ADPU) format. The ADPU format follows ISO (International Organization for Standardization)-8716. An interface layer 203 of the host 200 and an interface layer 103 of the secure MMC 100 exchange data in units known as MMC tokens or MMC blocks.

When the command exchanged between the application layer 210 of the host 200 and the application layer 101 of the secure MMC 100 is modified or a new command is required, the application layer 210 of the host 200 and the application layer 101 of the secure MMC 100 should be able to support the modified command and the new command. For instance, when the application layer 210 of the host 200 does not support a secure command for accessing the restricted area 113 of the secure MMC 100, the host 200 cannot access the restricted area 113 of the secure MMC 100.

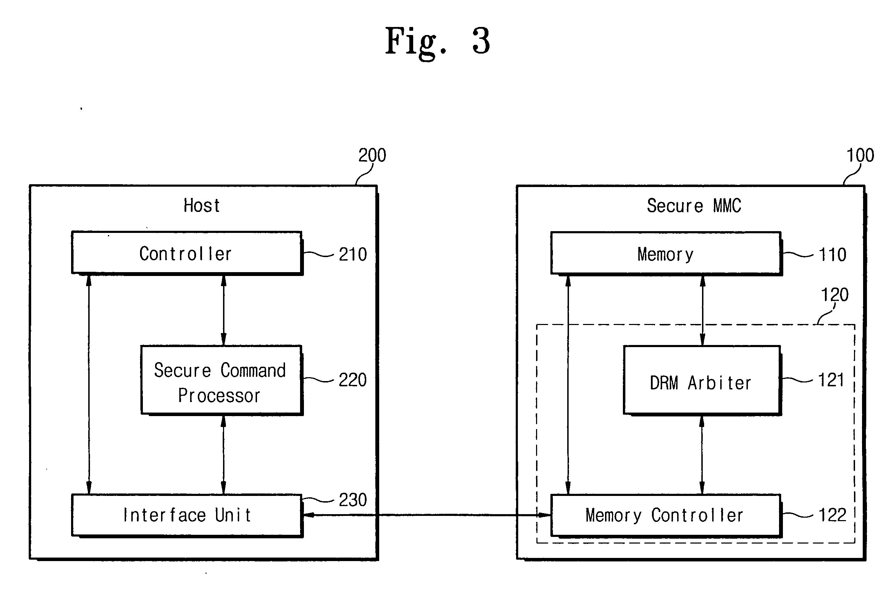

FIG. 3 is a block diagram illustrating a memory card system having a secure MMC according to an embodiment of the present invention.

Referring to FIG. 3, the memory card system includes a host 200 and a secure MMC 100. The host 200 may be any of various electronic devices such as a personal computer, a personal digital assistant (PDA), a digital camera, a smart phone, a digital recorder, an MP3, or the like. The host 200 includes a controller 210, a secure command processor 220, and an interface unit 230.

The controller 210 includes a processor to execute an application program such as windows media player or the like. While executing a series of commands in the application program, the controller 210 generates a normal command when access to the user data area 114 of the secure MMC 100 is requested. In contrast, the controller 210 generates a secure command when access to the restricted area 113 is requested.

When the output command of the controller 210 is a secure command, the secure command processor 220 converts the secure command to a normal command format such that the converted normal command contains secure command information.

The interface unit 230 converts the command and data from the controller 210 and the secure command processor 220 to an interface format adapted to be transmitted through an interface line connecting the host 200 and the secure MMC 100. The interface unit 230 includes an operating system (OS) based device driver such as universal serial bus (USB) driver, IEEE 1394 driver, or the like.

Although it is not illustrated in the drawings, the interface line connecting the host 200 and the secure MMC 100 includes a command line CMD, a data line DAT, a clock line CLK, power lines VDD and VSS, etc. The command line CMD and the data line DAT are bi-directional communication lines. The clock line CLK is a line for transmitting a clock supplied from the host 200 to the secure MMC 100. The power lines VDD and VSS are lines for transmitting power supplied from the host 200 to the secure MMC 100.

The secure MMC 100, as illustrated in FIG. 1, includes a memory 110 and a controller 120. The controller 120 includes a DRM arbiter 121 and a memory controller 122. The memory controller 122 is connected to the interface unit 230 in the host 200. The memory controller 122 controls access to the memory 110 in response to an access request command to the memory 110 from the host 200. The memory controller 122 according to this embodiment of the present invention determines whether or not a normal command input from the host 200 includes secure command information. When secure command information is included in the normal command, the memory controller 122 converts the normal command to a secure command and provides the converted secure command to the DRM arbiter 121. The DRM arbiter 121 arbitrates the access to the restricted area 113 in the memory 110.

In a memory card system having the above structure, since a secure command is converted to a normal command when the host 200 has to access the restricted area 113 of the secure MMC 100, the host 200 can access the restricted area 113 of the secure MMC 100 even though the interface unit 230 does not support secure commands.

In addition, when the host has to access the user data area 114 of the secure MMC 100, the interface unit 230 can access the user data area 114 of the secure MMC 100 by directly outputting the command and data from the controller 210.

If the interface unit 230 supports secure commands for accessing the restricted area 113 of the secure MMC 100, the host 200 need not include the secure command processor 220. When the secure command processor 220 is included in a host 200 with an interface unit 230 that supports secure commands, the interface unit 230 may directly receive secure commands output from the controller 210 or receive normal commands converted through the secure command processor 220 so that the interface unit 230 accesses the restricted area 113 of the secure MMC 100.

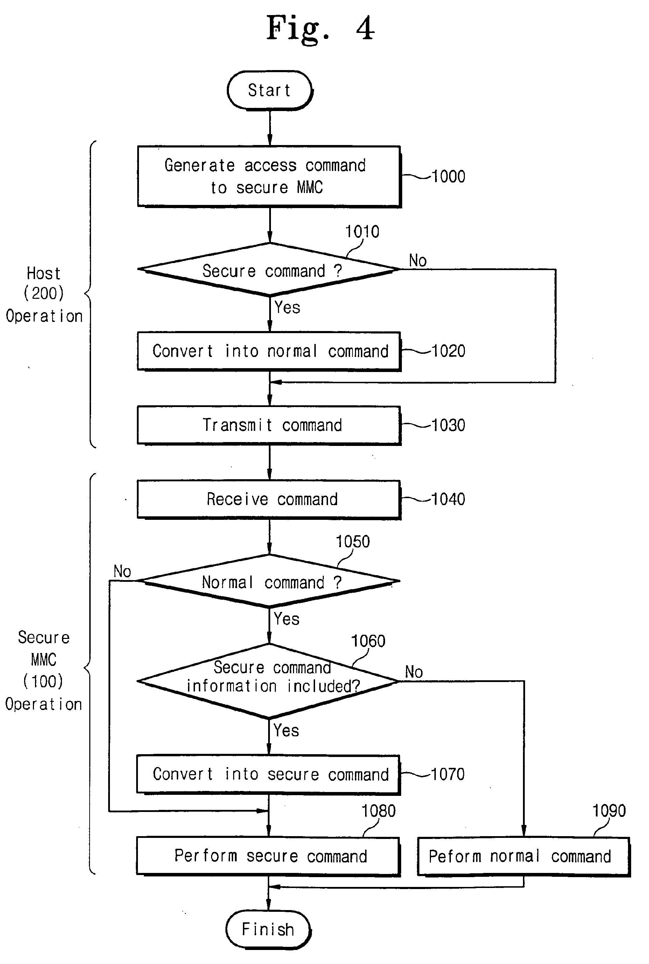

FIG. 4 is a flowchart illustrating how the host 200 may accesses the secure MMC 100 in the memory card system of FIG. 3. Referring to Fig. 4, at step 1000, the controller 210 in the host 200 generates an access command to the secure MMC 100. The secure command processor 220 determines whether or not the access command generated from the controller 210 is a secure command for accessing the restricted area 113 of the secure MMC 100. When the access command generated by the controller 210 is a secure command, the method proceeds to step 1020 so that the secure command processor 220 converts the secure command to a normal command. When the access command generated at the controller 210 is a normal command for accessing the user data area 114 of the secure MMC 100, the normal command is supplied to the interface unit 230. The interface unit 230 in the host 200 transmits the access command generated by the controller 210 to the secure MMC 100 at step 1030.

The memory controller 122 in the secure MMC 100 receives the command transmitted from the host 200 at step 1040. At step 1050, the memory controller 122 determines whether or not the received command is a normal command. When the received command is a normal command, the method proceeds to step 1060. Meanwhile, if the received command is a secure command, the method proceeds to step 1080. At step 1060, the memory controller 122 determines whether or not the received normal command contains secure command information. When the received normal command contains secure command information, the method proceeds to step 1070.

At step 1070, the memory controller 122 converts the received normal command to a secure command, and thereafter transfers the converted secure command to the DRM arbiter 121. The DRM arbiter 121 performs the access to the restricted area 113 of the memory 110 in response to the secure command.

At the previous step 1060, if it is determined that the received normal command does not contain secure command information, the memory controller 122 executes the received normal command at step 1090.

As described above, when the secure command processor 220 of the host 200 converts a secure command to a normal command containing secure command information and outputs the converted normal command, the memory controller 122 of the secure MMC 100 converts the normal command to a secure command depending on whether secure command information is contained in the normal command or not. Therefore, although the interface unit 230 including a communication interface such as a USB driver, IEE1394 or the like, does not support the command requesting the access to the restricted area 113 in the secure MMC 100, the host 200 can perform the access to the restricted area 113 in the secure MMC 100.

Signals exchanged between the host 200 and the secure MMC 100 when the host 200 generates commands for accessing the secure MMC 100 will now be illustrated.

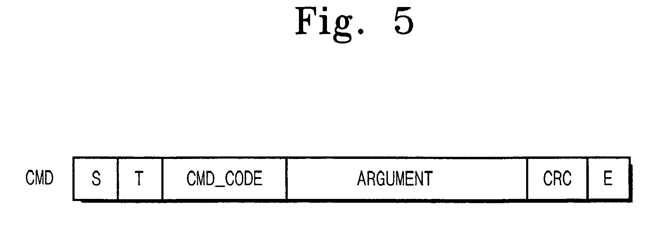

FIG. 5 is a schematic view of a command frame transmitted from the host 200 to the secure MMC 100 through the command line CMD. Referring to FIG. 5, the command provided from the host 200 to the secure MMC 100 through the command line CMD includes a start bit S, a transmission bit T, a command code CMD_CODE, an argument ARGUMENT, a CRC code CRC, and an end bit E. The command code CMD_CODE represents a type of command, and the argument ARGUMENT is dependent upon the command code CMD_CODE. For example, when the command transferred from the host 200 to the secure MMC 100 is a normal read command, the argument ARGUMENT is an address. When the command transferred from the host 200 to the secure MMC 100 is a normal write command, the argument ARGUMENT includes a secure command parameter.

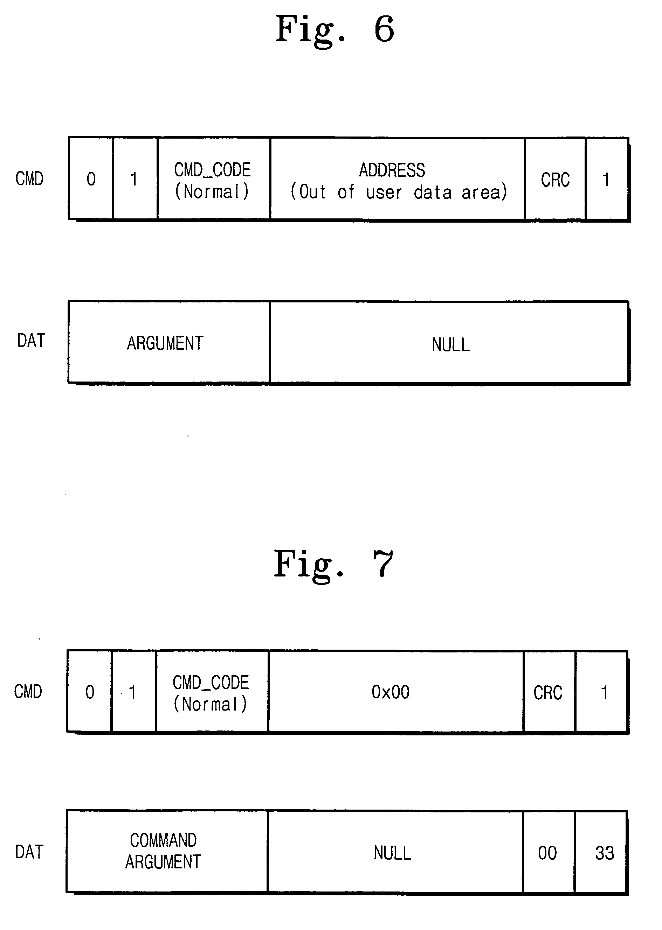

FIG. 6 is a schematic view illustrating an example in which a secure command is converted to a normal command by the secure command processor 220. The command code CMD_CODE of the converted normal write command includes a normal write command code, and the argument ARGUMENT includes addresses ADDR[31:0] designating a range out of the user data area 114. The argument ARGUMENT contained in the secure command, i.e., the secure command parameter, is transmitted to the secure MMC 100 through the data line DAT. The secure command parameter maybe regarded as part of or an extension of the argument sent through the command line CMD. In order to transmit the argument ARGUMENT contained in the secure command to the secure MMC 100, the converted normal command may be a write command WRITE_BLOCK having the data or a multiple block write command WRITE_MULTIPLE_BLOCK.

When the command code CMD_CODE contained in the received command is a normal command code but the argument ARGUMENT is an address designating the range out of the user data area 114, the secure MMC 100 may interpret the received command as a secure command.

FIG. 7 is a schematic view illustrating another example in which a secure command is converted to a normal command by the secure command processor 220. The command code CMD_CODE of the converted normal command is a normal write command code, and the argument ARGUMENT includes the address ADDR[31:0] designating a specific region. In this embodiment, the address ADDR[31:0] has a value 0x00 designating a zeroth sector of the memory 110, and the command argument contained in the secure command is transmitted to the secure MMC 100 through the data line DAT.

Data written to a master boot recorder (MBR) which is the zeroth sector of the memory 110, has a predetermined pattern. For instance, the last 2 bytes of the data stored in the MBR are 0xAA55 representing the MBR.

In this embodiment, the data transmitted to the secure MMC 100 through the data line DAT contains the command argument of the secure command, and the last 2 bytes of the data do not contain 0xAA55 representing the MBR but contains another pattern, e.g., 0x0033.

When the command code CMD_CODE contained in the received command includes a normal write command requesting writing to the zeroth sector and the data input through the data line DATA does not include the pattern representing the MBR, the secure MMC 100 may interpret the received command as a secure command.

As described in the examples above, the secure command processor 220 may convert a secure command to a normal command so that the converted normal command contains secure command information and the address of the converted normal command designates a range out of the user data area 114, or so that the address of the converted normal command designates the zeroth sector of the user data area 114 and the data pattern has different value than the defined pattern. The secure MMC 100 may convert the normal command to the secure command based on the secure command information contained in the normal command.

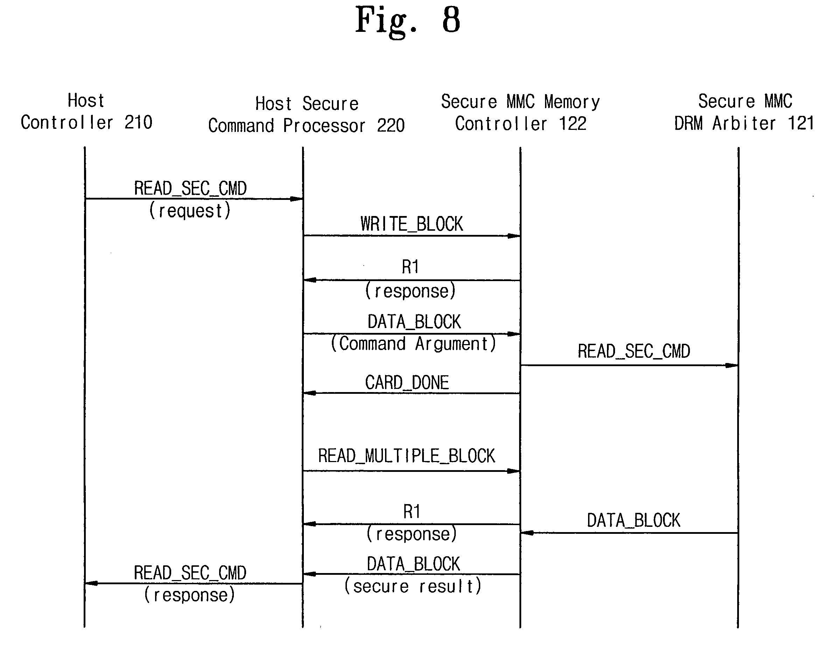

FIG. 8 is a schematic view illustrating the flow of signals exchanged between the host 200 and the secure MMC 100 when a secure read command READ_SEC_CMD is generated at the controller 210 in the host 200. The process for the secure read command READ_SEC_CMD contains a first phase and a second phase.

The controller 210 of the host 200 generates the secure read command READ_SEC_CMD when reading the data stored at the restricted area 113 of the secure MMC 100. The secure command processor 220 converts the secure read command READ_SEC_CMD generated by the controller 210 into a normal write command WRITE_BLOCK. The interface unit 230 transmits the normal write command WRITE_BLOCK output from the secure command processor 220 to the memory controller 122 in the secure MMC 100.

The memory controller 122 that has received the write command WRITE_BLOCK transmits a response signal R1 to the host 200. The secure command processor 220 that has received the response signal R1 outputs a command argument contained in the secure read command READ_SEC_CMD as the data DATA_BLOCK to the secure MMC 100. The memory controller 122 converts the received write command WRITE_BLOCK and the data DATA_BLOCK into a secure read command READ_SEC_CMD so as to transfer the converted secure read command READ_SEC_CMD to the DRM arbiter 121, and thereafter transfers a control signal CARD_DONE to the host 200. Thus, the first phase of the secure read command READ_SEC_CMD is completed.

The secure command processor 220 in the host 200 that has received the control signal CARD_DONE outputs the multiple block read command READ_MULTIPLE_BLOCK to the secure MMC 100. After transmitting the response signal R1 responsive to the multiple block read command READ_MULTIPLE_BLOCK to the host 200, the memory controller 122 in the secure MMC 100 provides the read data DATA_BLOCK received from the DRM arbiter 121 to the host 200 through the data line DAT.

The secure command processor 220 in the host 200 provides the data DATA_BLOCK input from the secure MMC 100 to the controller 210 in response to the secure read command READ_SEC_CMD. Therefore, the second phase of the secure read command READ_SEC_CMD is completed.

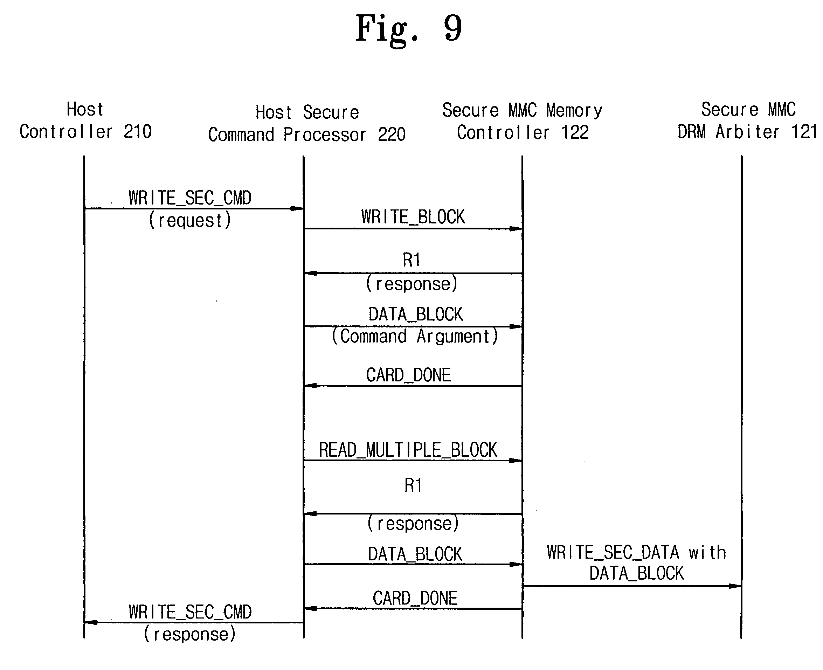

FIG. 9 is a schematic view illustrating the flow of signals exchanged between the host 200 and the secure MMC 100 when a secure write command WRITE_SEC_CMD is generated at the controller 210 in the host 200. The process for the secure write command WRITE_SEC_CMD includes a first phase and a second phase, also.

The controller 210 in the host 200 generates the secure write command WRITE_SEC_CMD when writing data to the restricted area 113 in the secure MMC 100. The secure command processor 220 converts the secure write command WRITE_SEC_CMD to the normal write command WRITE_BLOCK, and transmits the converted normal write command WRITE_BLOCK to the secure MMC 100 through the interface unit 230. The format of the converted normal command may be, for example, one of the formats illustrated in FIGS. 6 and 7.

The memory controller 122 in the secure MMC 100 that has received the write command WRITE_BLOCK transmits the response signal R1 to the host 200. The secure command processor 220 that has received the response signal R1 transmits the command argument contained in the secure write command WRITE_SEC_CMD to the secure MMC 100 as the data DATA_BLOCK. The memory controller 122 in the secure MMC 100 transmits the control signal CARD_DONE to the host 200. Thus, the first phase of the secure write command WRITE_SEC_CMD is completed.

The secure command processor 220 in the host that has received the control signal CARD_DONE outputs a multiple block write command WRITE_MULTIPLE_BLOCK to the secure MMC 100. The memory controller 122 in the secure MMC 100 transmits the response signal R1 responsive to the multiple block write command WRITE_MULTIPLE_BLOCK to the host 200. The secure command processor 220 in the host 200 transmits the data DATA_BLOCK to the secure MMC 100 again.

The memory controller 122 in the secure MMC 100 transmits the secure write command WRITE_SEC_CMD and the data DATA_BLOCK to the DRM arbiter 121 in response to the multiple block write command WRITE_MULTIPLE_BLOCK and the data DATA_BLOCK, and thereafter transmits the control signal CARD_DONE to the host 200.

The secure command processor 220 in the host 200 provides a predetermined response signal responsive to the secure write command WRITE_SEC_CMD to the controller 210. Therefore, the second phase of the secure write command WRITE_SEC_CMD is completed.

The normal command for accessing the user data area 114 includes the read command READ_BLOCK, the write command WRITE_BLOCK, the multiple block read command READ_MULTIPLE_BLOCK, the multiple block write command WRITE_MULTIPLE_BLOCK, etc. In addition, the secure command for accessing the restricted area 113 includes the secure read command READ_SEC_CMD, the secure write command WRITE_SEC_CMD, etc. The secure command further includes an information read command for reading properties of the secure MMC 100 and a status register.

In general, the interface unit 230 is designed such that it is adapted for a specific kind of device such as a flash memory, a random access memory (RAM), a static RAM (SRAM), or the like. Accordingly, it is possible to modify the interface unit 230 for supporting another kinds of devices or new functions.

The secure command processor 220 in the host 200 according to embodiments of the present invention converts a secure command generated at the controller 210 into a normal command, and provides the converted normal command to the interface unit 230. As a resultant, although the interface unit 230 does not support secure commands, it may still operate to send secure commands because it only receives what appear to be normal commands from the controller 210 and the secure command processor 220.

According to the present invention, it is possible to access the restricted area in a secure MMC even though the interface unit in the host does not support commands requesting access to the restricted area in the secure MMC.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A secure multimedia card (MMC) comprising:
a memory including a first area to be accessed by a first type of command, and a second area to be accessed by a second type of command; and
a controller to access the memory in response to a command and an argument input to the MMC;
wherein the controller converts the input command to the second type of command when the input command is the first type of command for accessing the first area and the argument has a predetermined value.

2. The secure MMC of claim 1, wherein the predetermined value comprises an address designating a range out of the first area.

3. The secure MMC of claim 2, wherein the argument comprises a secure command parameter.

4. The secure MMC of claim 3, wherein the controller regards data input to the MMC as a secure command parameter after converting the input command to the second type of command.

5. The secure MMC of claim 1, wherein the first area is a user data area for storing user data, and the second area is a restricted area for storing access restriction data.

6. A secure MMC comprising:
a memory including a user data area to be accessed by a normal command, and a restricted area to be accessed by a secure command; and
a controller to access the memory in response to a command and an argument input to the MMC;
wherein the controller converts the input command to the secure command when the input command is a normal command code, the argument has a predetermined value, and data input to the MMC has a predetermined pattern.

7. The secure MMC of claim 6, wherein:
the predetermined value of the argument comprises an address designating a zeroth sector in the user data area; and
a master boot record (MBR) mark contained in the data is different from a defined pattern.

8. The secure MMC of claim 7, wherein the controller regards data input to the MMC as a secure command parameter after converting the input command to the secure command.

9. The secure MMC of claim 6, wherein the second area stores data for a DRM function.

10. A memory card system comprising:
a host; and
a secure MMC including a first area to be accessed by a first type of command, and a second area to be accessed by a second type of command;
wherein the host outputs the first type of command and an argument with a predetermined value to access the second area of the secure MMC, and the secure MMC recognizes the first type of command as the second type of command when the argument input with the first command has the predetermined value.

11. The memory card system of claim 10, wherein the secure MMC comprises:
a memory including the first and second areas; and
a controller to access the memory in response to commands from the host.

12. The memory card system of claim 11, wherein the controller converts the first type of command to the second type of command when the argument input with the first type of command comprises an address designating a range out of the first area.

13. The memory card system of claim 12, wherein the controller converts data input from the host to a secure command parameter after converting the first type of command into the second type of command.

14. The memory card system of claim 10, wherein the first area comprises a user data area, and the second area comprises a restricted area.

15. The memory card system of claim 14, wherein:
the first type of command comprises a normal command;
the second type of command comprises a secure command;
the host outputs the normal command, the argument with a predetermined value, and data with a predetermined value to access the restricted area of the secure MMC; and
the secure MMC recognizes the normal command as the secure command to access the restricted area when the argument and the data input with the normal command have the predetermined values, respectively.

16. The memory card system of claim 15, wherein the controller converts the normal command to the secure command when the argument input with the normal command is an address designating a predetermined area in the user data area, and the data has a predetermined pattern.

17. The memory card system of claim 15, wherein the controller converts the normal command to the secure command when the argument input with the normal command designates a zeroth sector in the user data area, and an MBR mark contained in the data 1 is different from a defined pattern.

18. A method of operating a memory card system including a secure MMC having a user data area and a restricted data area, the method comprising:
generating a first command for accessing the user data area when access to the restricted data area is requested, wherein the first command includes access information of the restricted data area;
determining whether the first command includes the access information of the restricted data area;
converting the first command to a second command for accessing the restricted data area when the first command includes the access information of the restricted data area; and
accessing the restricted data area in response to the converted second command.

19. The method of claim 18, further comprising:
generating the first command when access to the user data area is requested; and
accessing the user data area in response to the first command when the first command does not include the access information of the restricted data area.

20. The method of claim 18, wherein the access information of the restricted data area comprises an address designating a range out of the user data area.

21. The method of claim 18, wherein the access information of the restricted data area comprises an address designating an MBR in the user data area, and data transmitted with the first command has a different value than an MBR mark.

22. A host comprising:
a controller to execute an application program;
an interface unit coupled to the controller to interface the host system to a secure MMC that operates in response to normal commands and secure commands; and a logic to convert a normal command to a secure command.

23. The host of claim 22 wherein the logic may convert the normal command to the secure command by sending a nonstandard argument with a normal command code.

24. The host of claim 23 wherein the nonstandard argument comprises an address designating a range out of a user data area in the secure MMC.

25. The host of claim 23 wherein the nonstandard argument comprises:
an address designating a sector having a master boot recorder (MBR) in a memory in the secure MMC; and
data having a value different from a defined pattern for the MBR.

26. The host of claim 23 wherein the nonstandard argument comprises a secure command parameter.

27. The host of claim 22 wherein the logic comprises a secure command processor coupled between the controller and the interface unit.

28. A secure MMC comprising:
a memory including a user data area to be accessed by normal commands, and a restricted area to be accessed by secure commands; and
a controller to interpret a normal command as a secure command when the normal command is accompanied by an argument having a secure command parameter.

29. The secure MMC of claim 28, wherein the controller may determine that the argument has the secure command parameter when the argument includes an address designating a range out of the user data area.

30. The secure MMC of claim 28, wherein the controller may determine that the argument has a secure command parameter when the argument includes an address designating a sector having an MBR in a memory in the secure MMC, and data having a value different from a defined pattern for the MBR.
